# FASCICULE DE BREVET EUROPEEN

(11) **EP 0 803 301 B1**
(45) Date de publication et mention de la délivrance du brevet: **28.03.2001**
(21) Numéro de dépôt: 97400905.2
(22) Date de dépôt: 22.04.1997
(51) Int. Cl.: B21D 26/02, B23K 20/02

(54) **Procédé et outillage de fabrication d'une pièce monobloc par les techniques de formage superplastique et de soudage par diffusion**
Verfahren zur Herstellung eines Gegenstandes durch superplastische Formung und Diffusionsschweissung
Method of manufacturing an article by superplastic forming and diffusion bonding

(30) Priorité: 25.04.1996 FR 9605249
(43) Date de publication de la demande: 29.10.1997
(73) Titulaire: AEROSPATIALE Société Nationale Industrielle, 75781 Paris Cédex 16 (FR)
(72) Inventeur: Andre, Joel René, 78380 Bougival (FR); Decker, Christophe, 92150 Suresnes (FR)
(74) Mandataire: Poulin, Gérard

(56) Documents cités:
- US-A- 4 087 037
- US-A- 5 055 143
- PATENT ABSTRACTS OF JAPAN vol. 011, no. 310 (M-630), 9 Octobre 1987 & JP 62 097782 A (KAWASAKI HEAVY IND LTD), 7 Mai 1987,

## Description

### Domaine technique

L'invention concerne principalement un procédé de fabrication d'une pièce monobloc à partir d'un empilement de tôles réalisée dans un métal tel qu'un alliage de titane permettant de mettre en oeuvre les techniques de formage superplastique et de soudage par diffusion, communément appelées techniques SPF-DB (de l'anglais "Superplastic Forming and Diffusion Bonding").

L'invention concerne également un outillage permettant de mettre en oeuvre ce procédé.

Le procédé et l'outillage selon l'invention peuvent être utilisés dans tous les domaines d'application des techniques SPF-DB. Parmi ces domaines, on citera en particulier l'industrie aérospatiale.

### Etat de la technique

Les techniques SPF-DB utilisent les propriétés de certains matériaux, tels que le titane et ses alliages de pouvoir s'allonger de façon permanente et importante sans risque de cassure, lorsqu'une pression est appliquée sur une tôle de ce matériau, à température élevée (environ 930°C). Cette technique utilise également l'aptitude des mêmes matériaux à se souder par diffusion dans les mêmes conditions de température et de pression.

Plus précisément, la technique SPF-DB consiste à placer entre deux demi-moules un empilement de tôles dans lequel on a pris soin d'insérer des barrières de soudage entre les régions des tôles qui ne doivent pas être soudées. Après la fermeture du moule, on effectue généralement au moins une opération de soudage par diffusion et au moins une opération de formage superplastique. L'ordre et le nombre de ces opérations dépendent essentiellement des caractéristiques géométriques des pièces à fabriquer.

Les opérations de soudage par diffusion consistent à chauffer les tôles et à appliquer sur celles-ci une pression assurant leur soudage dans les régions non protégées par une barrière de soudage. L'application de la pression de soudage se fait soit en injectant un gaz sous pression entre l'empilement de tôles et l'un des demi-moules, soit en injectant un gaz sous pression entre certaines des tôles, selon le type de soudage que l'on désire réaliser.

Les opérations de formage superplastique sont réalisées quant à elles en chauffant les tôles et en leur appliquant une pression de formage. A cet effet, on injecte un gaz sous pression entre les tôles de l'empilement. Cette injection de gaz à pour effet de plaquer les tôles contre les parois des deux demi-moules, sauf dans les régions préalablement soudées par diffusion, de façon à former des alvéoles.

Le chauffage des tôles est effectué soit en utilisant un moule équipé de moyens de chauffage tels que des résistances chauffantes, soit en plaçant le moule dans un appareil de chauffage tel qu'un four.

Pour que les opérations de soudage par diffusion et de formage superplastique puissent s'effectuer de façon satisfaisante, le gaz injecté ne doit pas pouvoir s'échapper du moule ou des alvéoles. Comme l'illustre notamment le document US-A-5 055 143, qui représente l'état de la technique le plus proche, lorsque la pièce à fabriquer comporte une bordure sur toute sa périphérie, cette étanchéité est généralement obtenue en appliquant une pression sur les deux demi-moules, de façon à pincer entre eux la région périphérique de l'empilement de tôles. Cette opération est faite tout en chauffant les tôles, de telle sorte que l'obtention de l'étanchéité est accompagnée d'un soudage par diffusion des régions périphériques des tôles.

Au cours de cette opération préliminaire à l'application de la technique SPF-DB, il se produit un fluage du métal vers l'extérieur entre les deux demi-moules, sur le bord périphérique de l'empilement de tôle. Ce fluage a pour conséquence une diminution de l'épaisseur de l'empilement de tôles dans sa région périphérique pincée entre les deux demi-moules. Ces derniers se rapprochent donc l'un de l'autre sur une distance indéterminée, qui dépend essentiellement du fluage des tôles. Par conséquent, l'écartement entre les deux demi-moules, qui détermine l'épaisseur de la pièce fabriquée, reste très imprécis.

Ce phénomène dû au fluage, déjà sensible sur des pièces sensiblement planes ou présentant un galbe très faible, s'accentue d'autant plus que le galbe ou la courbure de la pièce fabriquée augmente. En effet, à une variation relativement limitée de l'écartement entre les deux demi-moules dans la région périphérique correspond alors une variation d'autant plus importante de leur écartement dans la partie centrale du moule que la région périphérique est inclinée par rapport à la direction de déplacement relatif des demi-moules.

Comme on l'a décrit en référence à la figure 4 dans le document US-A-5 055 143, on peut prévoir d'équiper les deux demi-moules de surfaces de butée mécaniques qui viennent en appui l'une contre l'autre lorsqu'on applique une pression sur ces deux demi-moules.

Cependant, des essais ont montré que cette solution n'est pas satisfaisante. En effet, si elle permet bien de déterminer avec précision l'épaisseur de la pièce fabriquée, elle a pour conséquence que la pression exercée sur les zones périphériques des tôles est supprimée dès que les deux demi-moules arrivent en appui l'un contre l'autre. Par conséquent, le soudage des tôles par diffusion dans cette région périphérique est immédiatement interrompu. La qualité du soudage est donc mauvaise et ne permet pas d'assurer dans des conditions satisfaisantes la mise en oeuvre ultérieure de la technique SPF-DB.

Le document US-A-4 426 032 décrit également un procédé de fabrication mettant en oeuvre les techniques SPF-DB. Ce procédé se distingue notamment de celui qui est décrit dans le document US-A-5 055 143 par le fait que les deux demi-moules ne sont pas pressés l'un contre l'autre mais simplement liés l'un à l'autre par des boulons définissant entre eux un écartement maximal, et par le fait qu'une plaque de pression déformable est interposée entre l'un des demi-moules et un empilement de deux tôles destiné à former la pièce. L'étanchéité périphérique est assurée par un joint gonflable formé dans une région périphérique de l'empilement de tôles destinée à être découpée lors du détourage final de la pièce. Ce joint gonflable est réalisé en soudant les deux tôles de l'empilement selon deux lignes de soudure périphériques continues, espacées l'une de l'autre. Son gonflage a pour effet d'écarter les deux demi-moules pour les amener en appui contre les boulons qui les relient, et de plaquer une région périphérique de la plaque de pression contre le demi-moule adjacent à cette plaque. L'intérieur du moule est alors isolé de l'extérieur et les techniques SPF-DB peuvent être mises en oeuvre.

Dans ce procédé, le soudage par diffusion des plaques de l'empilement est obtenu en introduisant un gaz sous pression entre la plaque de pression et le demi-moule adjacent, de façon à presser les tôles de l'empilement entre la plaque de pression et l'autre demi-moule. L'épaisseur finale de la pièce dépend donc, comme dans le document US-A-5 055 143, du fluage du métal qui se produit lors de l'opération de soudage par diffusion.

De plus, le procédé décrit dans le document US-A-4 426 32 ne permet pas de réaliser simultanément l'étanchéité du moule et le soudage des tôles de l'empilement entre elles, par diffusion, dans la région périphérique.

Enfin, la présence de la plaque de pression augmente le coût de l'outillage.

Par ailleurs, le document US-A-4 087 037 propose un procédé et un outillage de fabrication de pièces selon les techniques SPF-DB, dans lesquels les opérations de formage sont réalisées avant les opérations de soudage par diffusion, ce qui permet de supprimer les barrières de soudage habituellement placées dans l'empilement de tôles. Comme dans le document US-A-4 426 032, on interpose une plaque de pression déformable entre l'empilement de tôles et l'un des demi-moules et on maintient ces derniers l'un contre l'autre au moyen de pinces. L'application de la pression de soudage par diffusion est assurée au moyen d'une première vessie gonflable que l'on interpose entre la plaque de pression et le demi-moule adjacent. Pour empêcher le glissement des tôles lors du formage, une deuxième vessie gonflable, de forme annulaire peut être interposée entre une région périphérique de l'empilement de tôles et le demi-moule adjacent à la première vessie.

Le procédé décrit dans ce document US-A-4 087 037 présente pratiquement les mêmes inconvénients que celui qui fait l'objet du document US-A-4 426 032.

### Exposé de l'invention

L'invention a pour objet un procédé et un outillage permettant de fabriquer une pièce monobloc par les techniques SPF-DB, d'une manière telle que l'épaisseur de la pièce obtenue soit maîtrisée avec une grande précision, aussi bien lorsque la pièce est relativement plane que lorsqu'elle présente une courbure ou un galbe important.

A cet effet, il est proposé un procédé de fabrication d'une pièce monobloc, par des techniques de formage superplastique et de soudage par diffusion, selon lequel on place un empilement de tôles entre deux demi-moules, on applique une pression sur ces deux demi-moules, de façon à pincer entre eux une région périphérique de l'empilement jusqu'à la venue en butée mécanique des deux demi-moules, et on applique, par injection de gaz entre les deux demi-moules, au moins une pression de soudage et de formage, pour obtenir ladite pièce monobloc, caractérisé par le fait qu'on place un cadre expansible entre la région périphérique de l'empilement de tôles et l'un des demi-moules, on pince ce cadre avec cette région périphérique entre les deux demi-moules, puis on gonfle le cadre expansible en maintenant les demi-moules en butée mécanique, de façon à souder les tôles par diffusion selon la région périphérique de l'empilement, avant d'appliquer la pression de soudage et de formage.

Dans une forme de réalisation préférentielle de l'invention on utilise un cadre expansible formé de deux tôles superposées préalablement soudées selon des lignes de soudure périphériques intérieure et extérieure et on interpose une barrière de soudage entre le cadre et l'empilement.

De préférence, on soude alors simultanément les tôles de l'empilement et les tôles du cadre expansible selon la ligne de soudure périphérique extérieure.

Avantageusement, après avoir appliqué la pression de soudage et de formage, on sépare les deux demi-moules, puis on découpe simultanément la pièce obtenue et les tôles du cadre expansible à l'intérieur de la ligne de soudure périphérique extérieure, de façon à séparer le cadre expansible de la pièce obtenue et à réaliser simultanément un détourage final de cette dernière.

Dans une forme de réalisation particulièrement avantageuse, on utilise deux demi- moules présentant respectivement une forme de poinçon et une forme de matrice.

L'invention concerne également un outillage de fabrication d'une pièce monobloc, par des techniques de formage et de soudage par diffusion, comprenant deux demi-moules équipés de surfaces de butée mécaniques aptes à venir en appui les unes contre les autres, des moyens pour presser les deux demi-moules l'un contre l'autre jusqu'à la venue en appui des butées mécaniques, et des moyens d'injection de gaz entre les deux demi-moules, aptes à appliquer au moins une pression de soudage et de formage sur les tôles d'un empilement de tôles placé entre les deux demi-moules, pour obtenir une pièce monobloc, caractérisé par le fait qu'il comprend de plus un cadre expansible, apte à être placé entre une région périphérique de l'empilement de tôles et l'un des demi-moules, et des moyens pour gonfler ce cadre expansible.

### Brève description des dessins

On décrira à présent, à titre d'exemples non limitatif, différents modes de mise en oeuvre de l'invention, en se référant aux dessins annexés, dans lesquels :
- les figures 1 à 3 sont des vues en coupe schématique illustrant trois étapes successives du procédé de fabrication selon l'invention, appliqué à la fabrication d'une pièce de géométrie sensiblement plane ;
- la figure 4 est une vue en perspective illustrant la dernière étape du procédé de fabrication illustré sur les figures 1 à 3 ;
- la figure 5 est une vue en coupe schématique comparable à la figure 3, illustrant une application du procédé selon l'invention à la fabrication d'une pièce galbée ;
- la figure 6 est une vue en perspective qui représente une pièce galbée obtenue par le procédé selon l'invention ;
- la figure 7 est une vue en perspective comparable à la figure 6, qui représente une autre pièce galbée obtenue par le procédé selon l'invention ; et
- la figure 8 est une vue en perspective illustrant un détail de la région périphérique d'une pièce de contour complexe obtenue par le procédé selon l'invention.

### Exposé détaillé de différents modes de mise en oeuvre de l'invention

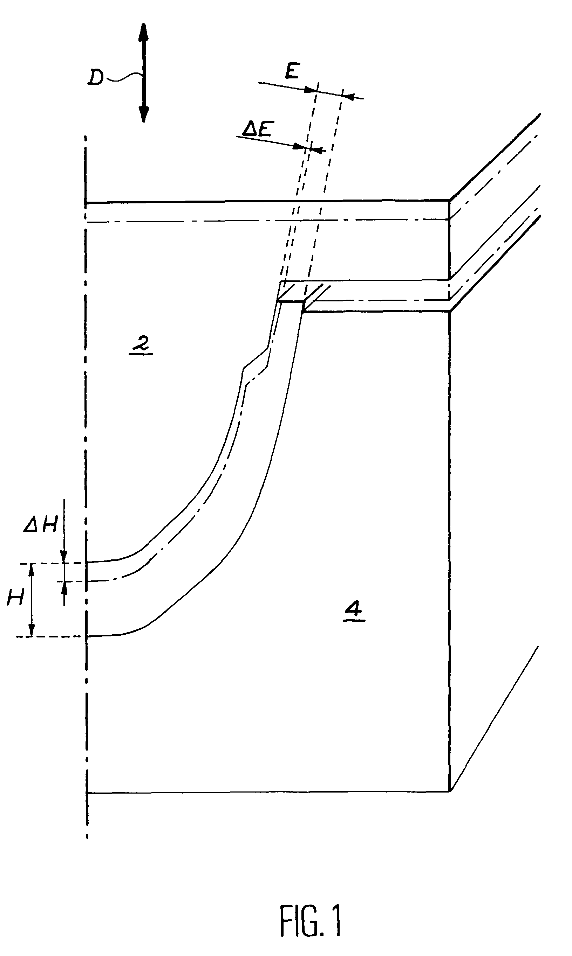

Sur les figures 1 à 4, on a représenté les différentes étapes de la fabrication d'une pièce creuse monobloc constituée par un panneau de géométrie sensiblement plane, renforcé intérieurement par des raidisseurs. Cette géométrie ne constitue qu'un exemple destiné à illustrer de façon simple le procédé selon l'invention.

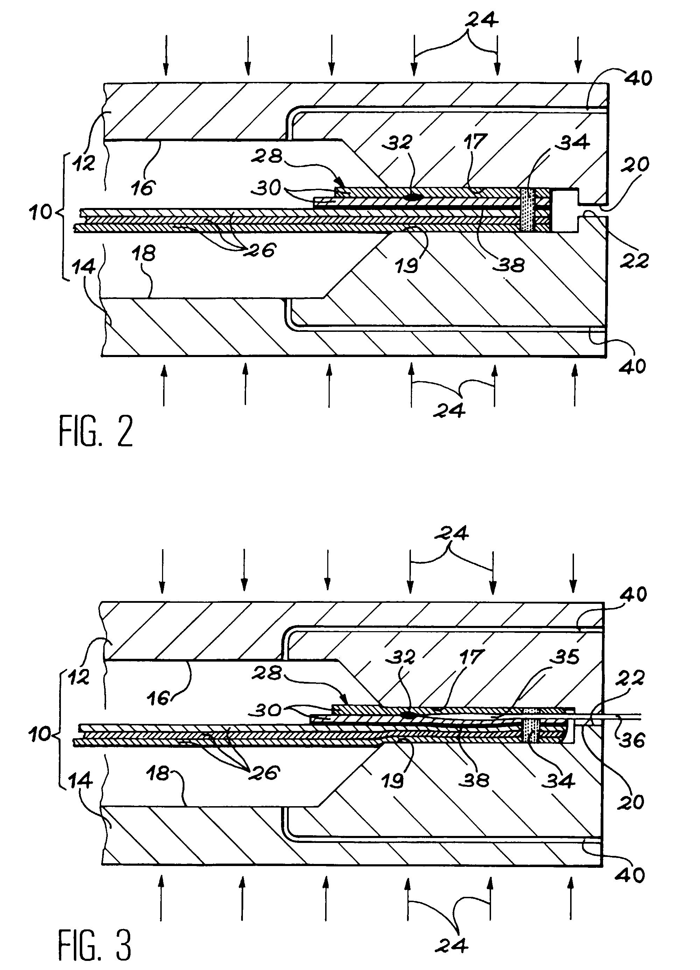

Comme l'illustrent les figures 1 à 4, on utilise un outillage qui comprend un moule 10 formé de deux demi-moules 12 et 14 dont les surfaces 16 et 18 en vis-à-vis définissent une empreinte complémentaire de la forme extérieure de la pièce à fabriquer, lorsque les deux demi-moules 12 et 14 sont accolés. Plus précisément, chacun des demi-moules 12 et 14 comporte un rebord périphérique saillant terminé par une surface de butée mécanique plane 20, 22. Ces surfaces de butée 20 et 22 sont agencées de telle sorte qu'elles peuvent venir en appui l'une contre l'autre, comme l'illustrent les figures 2 et 3, pour donner à l'empreinte formée entre les surfaces 16 et 18 une épaisseur précise bien déterminée.

Des moyens d'application de pression, illustrés symboliquement par les flèches 24 sur les figures 1 à 3, sont associés au moule 10 de façon à permettre d'appliquer une pression prédéterminée sur les deux demi-moules, jusqu'à la venue en appui des surfaces de butée 20 et 22 l'une contre l'autre. Ces moyens d'application de pression peuvent notamment être constitués par une presse ou par tout dispositif équivalent susceptible d'appliquer une pression approprié sur les faces extérieures des demi-moules 12 et 14 opposées à leurs surfaces 16 et 18.

L'outillage comprend également des moyens de chauffage, non illustrés sur la figure. Ces moyens de chauffage peuvent notamment être constitués par des résistances électriques noyées dans les demi-moules 12 et 14 ou par un four ou un dispositif équivalent, dans lequel est placé le moule 10. Ils permettent d'élever la température à l'intérieur de ce moule jusqu'à une valeur (par exemple, environ 930°C) compatible avec l'utilisation de la technique SPF-DB.

Les régions périphériques des surfaces 16 et 18 des demi-moules 12 et 14, situées au voisinage immédiat des surfaces de butée 20 et 22, forment des surfaces planes et parallèles 17 et 19, orientées perpendiculairement à la direction de déplacement des demi-moules 12 et 14 dans la forme de réalisation illustrée sur les figures 1 à 3. Lorsque les surfaces de butée 20 et 22 sont en appui l'une contre l'autre l'épaisseur de l'espace délimité entre ces surfaces planes 17 et 19 est légèrement inférieure à l'épaisseur cumulée d'un empilement de tôles 26 et d'un cadre expansible 28 susceptibles d'être placé dans cet espace.

L'empilement de tôles 26 est destiné à former la pièce monobloc que l'on désire fabriquer. Des barrières de soudage (non représentées) sont interposées entre les différentes tôles 26 de l'empilement, aux emplacements pour lesquels un soudage des tôles n'est pas souhaité. Dans la forme de réalisation illustrée, l'empilement est formé de trois tôles 26. Un nombre de tôles 26 différent peut bien entendu être utilisé en fonction des caractéristiques de la pièce que l'on désire réaliser.

Le cadre expansible 28 est formé de deux tôles 30 superposées, préalablement soudées entre elles selon une ligne 32 de soudure périphérique intérieure continue et selon une ligne 34 de soudure périphérique extérieure continue. Dans la forme de réalisation représentée, la ligne 34 de soudure périphérique extérieure continue se prolonge dans l'épaisseur de l'empilement de tôles 26, de façon à assurer un positionnement initial relatif du cadre expansible 28 par rapport à l'empilement de tôles 26 ainsi qu'un positionnement initial relatif des tôles de cet empilement. Les lignes de soudure continues 32 et 34 définissent entre les deux tôles 30 du cadre expansible 28 un espace clos 35 dans lequel un gaz sous pression peut être injecté par un passage 36 (figure 2). Cette injection de gaz permet de gonfler le cadre expansible 28, comme on l'expliquera ultérieurement.

Lors de la mise en place de l'empilement de tôles 26 et du cadre expansible 28 dans le moule 10, on prend soin d'interposer entre eux une barrière de soudage illustrée schématiquement en 38 sur les figures 1 à 3. Cette barrière de soudage 38 a pour fonction d'empêcher le soudage des tôles adjacentes de l'empilement de tôles 26 et du cadre expansible 28 lors du gonflage de ce dernier. Pour des raisons comparables, une barrière de soudage peut aussi être placée entre les tôles 30 du cadre expansible 28, dans l'espace clos 35.

Bien qu'il soit associé à l'empilement de tôles 26 par la ligne 34 de soudure périphérique extérieure continue dans la forme de réalisation décrite, le cadre expansible 28 constitue l'un des élément de l'outillage conformément à l'invention.

L'outillage conforme à l'invention comprend de plus et de façon connue des passages tels qu'illustrés en 40 et 42 sur la figure 3, permettant d'injecter un gaz sous pression dans les régions appropriées à l'intérieur du moule 10, de façon à assurer l'application des pressions de soudage par diffusion et de formage superplastique. L'agencement de ces passages 40 et 42 dépend essentiellement de la géométrie de la pièce que l'on désire réaliser. Cet agencement, dont la mise au point est familière aux utilisateurs des techniques SPF-DB, ne fait pas partie de l'invention.

La fabrication d'une pièce de géométrie sensiblement plane à l'aide de l'outillage qui vient d'être décrit va à présent être expliquée en se référant successivement aux figures 1 à 4.

Au cours d'une phase préliminaire, l'opérateur découpe les tôles 26 dans lesquelles doit être fabriquée la pièce monobloc, afin que les dimensions de ces tôles excèdent légèrement les dimensions finales de la pièce.

L'opérateur découpe également les tôles 30 destinées à former le cadre expansible 28. Généralement, ce découpage est réalisé de telle sorte que le contour extérieur du cadre expansible 28 soit sensiblement identique au contour extérieur des tôles 26. Comme on l'expliquera ultérieurement, le contour extérieur des tôles 30 formant le cadre expansible 28 peut toutefois présenter des formes plus complexes lorsque le contour de la pièce à fabriquer présente des parties en retrait. De même, le contour intérieur des tôles 30 destinées à former le cadre expansible 28 est découpé de façon telle que ces tôles 30 présentent une largeur généralement uniforme. Dans certains cas, le contour intérieur des tôles 30 peut toutefois présenter des parties en saillie, comme on l'expliquera également par la suite.

Lorsque la découpe des tôles 26 et 30 est terminée, on réalise les lignes de soudure périphériques intérieure 32 et extérieure 34, après avoir pris soin d'interposer la barrière de soudage 38 entre les tôles 26 et 30 adjacentes et des barrières de soudage appropriées (non représentées) entre les tôles 26. Lorsque cette opération est terminée, le cadre expansible 28 est formé et il constitue avec l'empilement de tôles 26 un ensemble unitaire qui peut être placé entre les deux demi-moules 12 et 14 après leur ouverture. La région périphérique de l'empilement de tôles 26 ainsi que le cadre expansible 28 sont alors placés entre les surfaces 17 et 19 des deux demi-moules 12 et 14. Dans ces conditions, les surfaces de butée 20 et 22 formées sur ces deux demi-moules restent écartées l'une de l'autre d'une certaine distance (figure 1).

Les moyens de chauffage (non représentés) sont alors mis en oeuvre afin d'élever la température dans le moule 10 jusqu'à la valeur nécessaire au formage superplastique et au soudage par diffusion. Lorsque cette température (par exemple, environ 930°C) est atteinte, on applique sur les deux demi-moules 12 et 14, à l'aide des moyens de pression symbolisés par les flèches 24, une pression suffisante pour assurer le soudage par diffusion des régions périphériques des plaques 26 qui sont alors pincées entre les surfaces 17 et 19 des deux demi-moules.

La température et la pression appliquées sur la région périphérique de l'empilement de tôles 26 ainsi que sur le cadre expansible 28 ont pour effet d'amorcer le soudage par diffusion des tôles 26 dans cette région périphérique. Cela se traduit par un fluage du métal vers l'extérieur et par une réduction de l'épaisseur des tôles 26 dans cette région périphérique. Ce phénomène se poursuit jusqu'à la venue en appui des surfaces de butée 20 et 22, illustrée sur la figure 2.

Dès la venue en appui des surfaces de butée 20 et 22 ou même avant, le cadre expansible 28 est gonflé par injection d'un gaz sous pression au travers du passage 36. Selon le cas, le début du gonflage peut être commandé soit en réponse au signal délivré par un capteur détectant le contact entre les surfaces 20 et 22, soit par un système de temporisation mis en oeuvre dès l'application de la pression sur les demi-moules 12 et 14.

Le gonflage du cadre expansible 28 permet de poursuivre l'application de la pression nécessaire au soudage des tôles 26 par diffusion, dans leur région périphérique, après la venue en contact des surfaces de butée 20 et 22. On a illustré schématiquement et de façon volontairement exagérée sur la figure 2 l'effet de ce gonflage sur les tôles 26.

L'introduction de gaz sous pression dans le cadre expansible 28 se poursuit pendant un temps suffisant pour assurer un achèvement du soudage par diffusion des tôles 26 dans leur région périphérique.

Lorsque ce soudage est terminé, les opérations classiques de formage superplastique et de soudage par diffusion, qui dépendent essentiellement de la forme de la pièce monobloc que l'on désire fabriquer, sont mises en oeuvre.

Ainsi et uniquement à titre d'exemple, dans la forme de réalisation illustrée sur les figures 1 à 4, on réalise tout d'abord le soudage par diffusion des différentes tôles 26, dans les zones à souder situées à l'intérieur de la région périphérique de l'empilement, par injection de gaz sous pression par les passages 40. Le formage superplastique est ensuite effectué en injectant entre les tôles 26 un gaz sous pression par le passage 42.

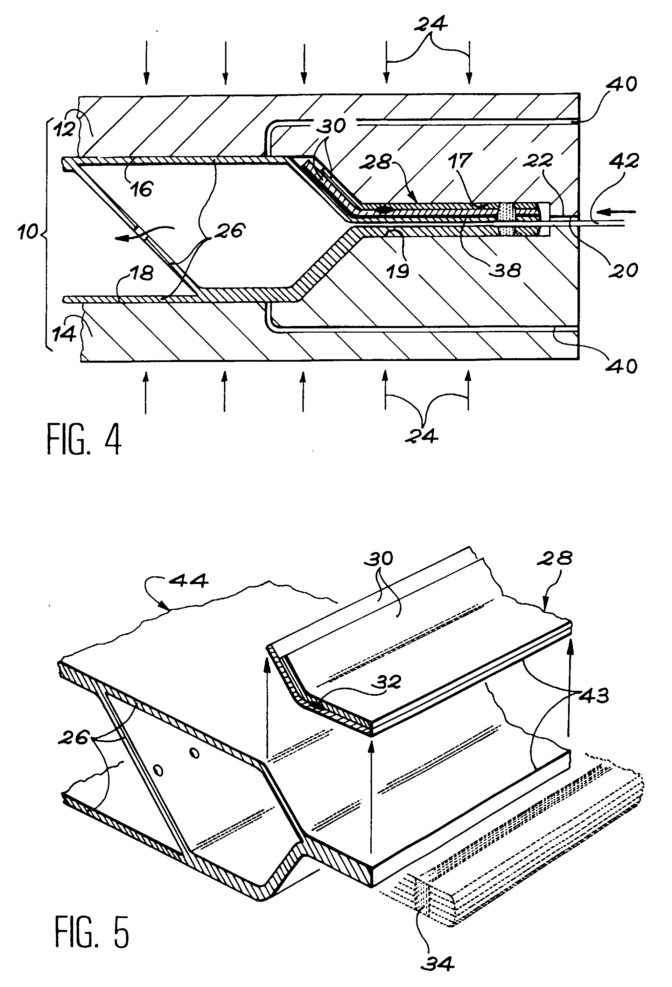

La figure 4 représente la pièce obtenue lorsque ces différentes opérations sont terminées, après ouverture du moule 10. Plus précisément, on voit sur cette figure 4 qu'une découpe simultanée des tôles 26 et 30 selon une ligne de découpe 43 située à l'intérieur de la ligne 34 de soudure périphérique extérieure 34 et à proximité de cette ligne permet simultanément de séparer le cadre expansible 28 de la pièce 44 et de réaliser le détourage final de cette dernière. Le cadre expansible 28 constitue ainsi un outil jetable.

La description qui précède fait apparaître clairement que le formage superplastique de la pièce a pour effet de plaquer les tôles extérieures de l'empilement, de tôles 26 contre les surfaces 16 et 18 des deux demi-moules 12 et 14 alors que ces derniers sont en appui l'un contre l'autre par leur surface de butée 20 et 22. Par conséquent, l'épaisseur de la pièce 44 obtenue peut être déterminée avec une très grande précision et de façon parfaitement reproductible.

Comme on l'a illustré sur la figure 5, cet avantage est particulièrement important lorsque la pièce monobloc que l'on désire fabriquer n'est pas un panneau plan ou sensiblement plan mais une pièce de forme galbée, présentant une courbure qui peut être importante.

Dans ce cas, on voit sur la figure 5 que le demi-moule 12 se présente sous la forme d'un poinçon alors que le demi-moule 14 se présente sous la forme d'une matrice. Les deux surfaces 17 et 19 de ces demi-moules, entre lesquelles sont pincés à la fois le cadre expansible 28 et la région périphérique de l'empilement de tôles 26, sont alors fortement inclinées par rapport à la direction de déplacement relative des deux demi-moules 12 et 14 sous l'action des moyens de pression symbolisés par les flèches 24. En revanche les surfaces de butée 20 et 22 restent des surfaces planes orientées selon une direction perpendiculaire à cette direction de déplacement relatif des deux demi-moules.

En l'absence des surfaces de butée 20 et 22 et du cadre expansible 28 selon l'invention, on comprend qu'une variation relativement faible de l'écartement entre les surfaces 17 et 19, résultant du fluage des tôles 26 lors de l'opération préliminaire de soudage par diffusion de la région périphérique de l'empilement de tôles 26, se traduirait par un déplacement relatif sensiblement plus important entre les parties des surfaces 16 et 18 sensiblement perpendiculaires à la direction de déplacement des deux demi-moules.

Au contraire, l'outillage et le procédé selon l'invention permettent, comme on l'a vu précédemment, de réaliser le formage superplastique en appliquant les tôles extérieures de l'empilement de tôles 26 contre des surfaces 16 et 18 dont l'écartement est fixé avec précision par la venue en appui des surfaces de butée 20 et 22. Le cadre expansible 28 permet, comme précédemment, d'achever le soudage par diffusion des régions périphériques des tôles 26, malgré la disparition de la pression appliquée sur ces régions périphériques par les deux demi-moules lorsque les surfaces de butée 20 et 22 viennent en appui l'une contre l'autre.

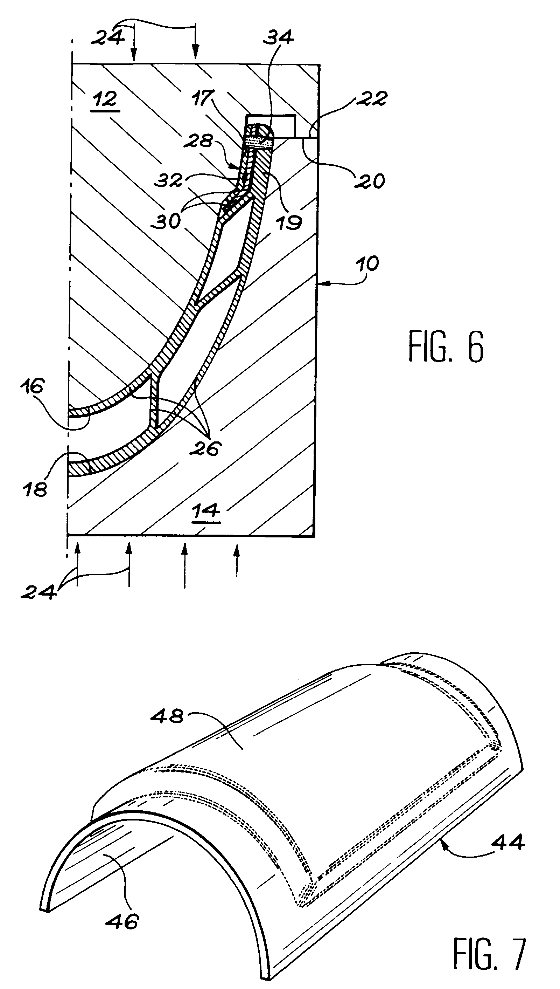

On a représenté à titre d'exemples sur les figures 6 et 7 deux pièces monobloc 44 susceptibles d'être fabriquées par le procédé selon l'invention.

La pièce illustrée sur la figure 6 est une pièce présentant une forte courbure ainsi qu'une surface concave 46 relativement lisse. En revanche, la surface convexe 48 de la pièce 44, obtenue par le formage superplastique, est en saillie sauf sur sa région périphérique.

La pièce 44 illustrée sur la figure 7 est une pièce fortement incurvée qui présente une partie centrale en saillie aussi bien sur sa face convexe 48 que sur sa face concave 46.

Afin d'illustrer les possibilités offertes par le procédé selon l'invention, on voit sur la figure 7 que le rebord des parties centrales en saillie peut présenter une forme complexe matérialisée ici par un îlot de soudage 50. Cet îlot de soudage 50 prolonge vers l'intérieur de la pièce la région périphérique dans laquelle toutes les tôles 26 sont soudées par diffusion. Une telle forme peut être obtenue, conformément à l'invention, en donnant aux surfaces en vis-à-vis 16 et 18 des deux demi-moules 12 et 14 les formes appropriées et en prolongeant vers l'intérieur les deux tôles 30 formant le cadre expansible 28, afin de réaliser l'îlot de soudage 50 au cours de l'opération préliminaire de soudage des tôles dans leur région périphérique.

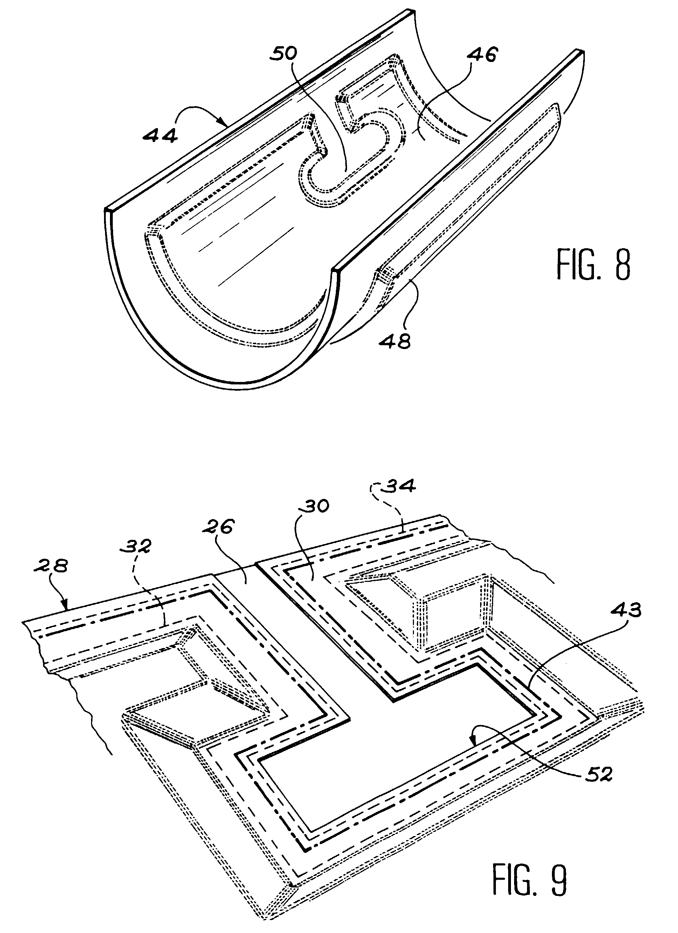

Enfin et comme on l'a illustré sur la figure 8, le procédé selon l'invention permet aussi de fabriquer des pièces monobloc présentant un contour extérieur tourmenté, même dans le cas où les dimensions d'une entaille telle que l'entaille 52 sur la figure 8 sont trop grandes pour qu'un soudage par diffusion des différentes tôles 26 soit possible par la simple action des moyens de pression 24 agissant sur les deux demi-moules 12 et 14.

Dans ce cas, on place dans le moule un empilement de tôles 26 présentant un contour dépourvu de découpe et on superpose à cet empilement de tôles un cadre expansible 28 de largeur réduite et sensiblement uniforme, qui suit le contour de la pièce que l'on désire fabriquer. Les formes des surfaces en vis-à-vis 16 et 18 des demi-moules 12 et 14 sont alors adaptées aux formes du contour de la pièce à fabriquer.

Après la venue en appui des surfaces de butée 20 et 22 formées sur les deux demi-moules, on gonfle le cadre expansible 28 conformément au procédé décrit précédemment. Du fait de la largeur réduite du cadre expansible 28, la pression appliquée par ce cadre sur l'empilement de tôles 26 est suffisante en tout point pour assurer un soudage par diffusion efficace des différentes tôles. Lorsque ce soudage est terminé et délimite ainsi la périphérie définitive de la pièce à fabriquer, les opérations de formage superplastique et de soudage par diffusion sont mises en oeuvre de façon classique.

Après ouverture du moule, la découpe des tôles 26 de l'empilement et des tôles 30 du cadre expansible 28 à l'intérieur de la ligne de soudure périphérique extérieure 34 (en traits discontinus sur la figure 9) et à proximité immédiate de cette ligne de soudure permet d'obtenir la pièce monobloc présentant le profil extérieur désiré. La ligne de découpe 43 est illustrée en traits mixtes sur la figure 9. Ici encore, le dimensionnement de la pièce est donc assuré avec une grande précision et de façon parfaitement reproductible.

Bien entendu, le procédé et l'outillage conformes à l'invention peuvent être utilisés pour la fabrication de pièces de dimensions et de formes extrêmement variées. Selon la géométrie de ces pièces et de façon classique dans l'utilisation des techniques de formage superplastique et de soudage par diffusion, le nombre des tôles 26 de l'empilement placé initialement dans le moule peut être un nombre quelconque supérieur ou égal à deux.

## Revendications

1. Procédé de fabrication d'une pièce monobloc (54), par des techniques de formage superplastique et de soudage par diffusion, selon lequel on place un empilement de tôles (26) entre deux demi-moules (12,14), on applique une pression sur ces deux demi-moules, de façon à pincer entre eux une région périphérique de l'empilement jusqu'à la venue en butée mécanique des deux demi-moules, et on applique, par injection de gaz entre les deux demi-moules, au moins une pression de soudage et de formage, pour obtenir ladite pièce monobloc, caractérisé par le fait qu'on place un cadre expansible (28) entre la région périphérique de l'empilement de tôles (26) et l'un des demi-moules, on pince ce cadre avec cette région périphérique entre les deux demi-moules, puis on gonfle le cadre expansible (28) en maintenant les demi-moules (12,14) en butée mécanique, de façon à souder les tôles par diffusion selon la région périphérique de l'empilement, avant d'appliquer la pression de soudage et de formage.

2. Procédé selon la revendication 1, caractérisé par le fait qu'on utilise un cadre expansible (28) formé de deux tôles superposées (30), préalablement soudées selon des lignes de soudure périphériques intérieure et extérieure (32,34), et on interpose une barrière de soudage (38) entre le cadre et l'empilement.

3. Procédé selon la revendication 2, caractérisé par le fait qu'on soude simultanément les tôles (26) de l'empilement et les tôles (30) de cadre expansible (28) selon la ligne de soudure périphérique extérieure (34).

4. Procédé selon la revendication 3, caractérisé par le fait qu'après avoir appliqué la pression de soudage et de formage, on sépare les deux demi-moules (12,14), puis on découpe simultanément la pièce obtenue et les tôles (30) du cadre expansible (28) à l'intérieur de la ligne de soudure périphérique extérieure (34), de façon à séparer le cadre expansible de la pièce obtenue et à réaliser simultanément un détourage final de cette dernière.

5. Procédé selon l'une quelconque des revendications précédentes, caractérisé par le fait qu'on utilise deux demi-moules (12,14) présentant respectivement une forme de poinçon et une forme de matrice.

6. Outillage de fabrication d'une pièce monobloc (44), par des techniques de formage et de soudage par diffusion, comprenant deux demi-moules (12,14) équipés de surfaces de butée mécaniques (20,22) aptes à venir en appui les unes contre les autres, des moyens (24) pour presser les deux demi-moules l'un contre l'autre jusqu'à la venue en appui des surfaces de butée mécaniques, et des moyens (40,42) d'injection de gaz entre les deux demi-moules, aptes à appliquer au moins une pression de soudage et de formage sur les tôles d'un empilement de tôles (26) placé entre les deux demi-moules, pour obtenir une pièce monobloc, caractérisé par le fait qu'il comprend de plus un cadre expansible (28), apte à être placé entre une région périphérique de l'empilement de tôles (26) et l'un des demi-moules, et des moyens (36) pour gonfler ce cadre expansible.

7. Outillage selon la revendication 6, caractérisé par le fait que le cadre expansible (28) est formé de deux tôles superposées (30) soudées entre elles selon des lignes de soudure périphériques intérieure et extérieure (32,34), l'outillage comprenant de plus une barrière de soudage (38) apte à être interposée entre le cadre expansible (28) et l'empilement de tôles (26).

8. Outillage selon la revendication 7, caractérisé par le fait que le cadre expansible (28) est un outil jetable dont les tôles superposées (30) sont soudées aux tôles (26) de l'empilement selon la ligne de soudure périphérique extérieure (34).

9. Outillage selon la revendication 8, caractérisé par le fait que les deux demi-moules (12,14) présentent respectivement une forme de poinçon et une forme de matrice.

## Patentansprüche

1. Verfahren zur Herstellung eines Einzelblockteils (54) mittels superplastischer Formgebungs- und Diffusionsschweißverfahren, bei dem ein Blechstapel (26) zwischen zwei Halbformen (12, 14) eingebracht wird, Druck auf diese beiden Halbformen ausgeübt wird, so daß zwischen ihnen ein Randbereich des Stapels bis zum mechanischen Anschlag der beiden Halbformen zusammengepreßt wird, und durch Gaseinspritzung zwischen die beiden Halbformen mindestens ein Verschweißungs- und Formungsdruck ausgeübt wird, um das besagte Einzelblockteil zu erhalten, dadurch gekennzeichnet, daß zwischen den Randbereich des Blechstapels (26) und eine der Halbformen ein dehnbarer Rahmen (28) eingebracht wird, daß dieser Rahmen mit diesem Randbereich zwischen den beiden Halbformen gequetscht wird, daß anschließend der dehnbare Rahmen (28) bei Aufrechterhaltung des mechanischen Anschlags der Halbformen (12, 14) aufgebläht wird, wobei die Bleche durch Diffusion am Randbereich des Stapels verschweißt werden, ehe der Verschweißungs- und Formungsdruck ausgeübt wird.

2. Verfahren gemäß Anspruch 1, dadurch gekennzeichnet, daß ein dehnbarer Rahmen (28) verwendet wird, der aus zwei übereinanderliegenden Blechen (30) gebildet wird, die zuvor entlang der inneren und äußeren Verschweißungsrandlinien (32, 34) miteinander verschweißt wurden, und eine Verschweißungssperre (38) zwischen den Rahmen und den Stapel eingebracht wird.

3. Verfahren gemäß Anspruch 2, dadurch gekennzeichnet, daß die Bleche (26) des Stapels und die Bleche (30) des dehnbaren Rahmens (28) gleichzeitig entlang der äußeren Verschweißungsrandlinie (34) verschweißt werden.

4. Verfahren gemäß Anspruch 3, dadurch gekennzeichnet, daß die beiden Halbformen (12, 14) nach Anwendung des Verschweißungs- und Formungsdrucks getrennt werden und daß anschließend das erhaltene Teil und die Bleche (30) des dehnbaren Rahmens (28) gleichzeitig innerhalb der äußeren Verschweißungsrandlinie (34) so zugeschnitten werden, daß der dehnbare Rahmen vom erhaltenen Teil getrennt wird und daß gleichzeitig ein endgültiges Beschneiden des letztgenannten erfolgt.

5. Verfahren gemäß einem der voranstehenden Ansprüche, dadurch gekennzeichnet, daß zwei Halbformen (12, 14) verwendet werden, die jeweils eine Gesenk- bzw. eine Matrizenform aufweisen.

6. Werkzeugausrüstung zur Herstellung eines Einzelblockteils (44) mittels Formgebungs- und Diffusionsschweißverfahren, die zwei Halbformen (12, 14) umfaßt, welche mit mechanischen Anschlagoberflächen (20, 22), die aneinander anliegen, mit Vorrichtungen (24) zum Aneinanderpressen der beiden Halbformen bis zum Aufliegen der beiden mechanischen Anschlagoberflächen sowie Vorrichtungen (40, 42) zum Einspritzen von Gas zwischen die beiden Halbformen versehen sind, die dazu geeignet sind, mindestens einen Verschweißungs- und Formungsdruck auf die Bleche eines Blechstapels (26) auszuüben, der zwischen die beiden Halbformen eingebracht wird, um ein Einzelblockteil zu erhalten, dadurch gekennzeichnet, daß sie ferner einen dehnbaren Rahmen (28), der zwischen einen Randbereich des Blechstapels (26) und eine der Halbformen eingebracht werden kann, sowie Vorrichtungen zum Aufblähen dieses dehnbaren Rahmens umfaßt.

7. Werkzeugausrüstung gemäß Anspruch 6, dadurch gekennzeichnet, daß der dehnbare Rahmen (28) aus zwei übereinanderliegenden Blechen (30) besteht, die entlang der inneren und äußeren Verschweißungsrandlinien (32, 34) miteinander verschweißt werden, wobei die Werkzeugausrüstung des weiteren eine Verschweißungssperre (38) umfaßt, die zwischen den dehnbaren Rahmen (28) und den Blechstapel (26) eingebracht werden kann.

8. Werkzeugausrüstung gemäß Anspruch 7, dadurch gekennzeichnet, daß es sich bei dem dehnbaren Rahmen (28) um ein Einwegwerkzeug handelt, dessen übereinanderliegende Bleche (30) mit den Blechen (26) des Stapels entlang der äußeren Verschweißungsrandlinie (34) verschweißt werden.

9. Werkzeugausrüstung gemäß Anspruch 8, dadurch gekennzeichnet, daß die beiden Halbformen (12, 14) jeweils eine Gesenk- bzw. eine Matrizenform aufweisen.

## Claims

1. Method for manufacturing a monolithic article (54), by superplastic forming and diffusion bonding techniques, according to which a stack of sheets (26) is placed between two half-moulds (12, 14), pressure is applied to these two half-moulds in such a way as to clamp between them a peripheral region of the stack until the two half-moulds come into mechanical contact, and there is applied, by injection of gas between the two half-moulds, at least a bonding and forming pressure to obtain the said monolithic article, characterised by the fact that an expansible frame (28) is placed between the peripheral region of the stack of sheets (26) and one of the half-moulds, this frame is clamped with its peripheral region between the two half-moulds, then the expansible frame (28) is inflated while maintaining the half-moulds (12, 14) in mechanical contact, so as to bond the sheets by diffusion along the peripheral region of the stack, before the bonding and forming pressure is applied.

2. Method according to Claim 1, characterised by the fact that there is used an expansible frame (28) formed of two superposed sheets (30), previously bonded along internal and external peripheral bonding lines (32, 34), and a bonding barrier (38) is interposed between the frame and the stack.

3. Method according to Claim 2, characterised by the fact that the sheets (26) of the stack and the sheets (30) of the expansible frame (28) are bonded simultaneously along the external peripheral bonding line (34).

4. Method according to Claim 3, characterised by the fact that after the bonding and forming pressure has been applied, the two half-moulds (12, 14) are separated, then simultaneously the article obtained and the sheets (30) of the expansible frame (28) are cut out inside the external peripheral bonding line (34), is such a way as to separate the expansible frame from the article produced and to achieve simultaneous final removal of the latter.

5. Method according to any one of the foregoing claims, characterised by the fact that two half-moulds (12, 14) are used, having respectively the shape of a punch and the shape of a matrix or die.

6. Apparatus for producing a monolithic article (44), by forming and diffusion bonding techniques, comprising two half-moulds (12, 14) equipped with mechanical abutment surfaces (20, 22) adapted to come into mutual contact, means (24) for pressing the two half-moulds against one another until the mechanical abutment surfaces come into mutual contact, and means (40, 42) for injecting a gas between the two half-moulds, adapted to apply at least a bonding and forming pressure to the sheets of a stack of sheets (26) placed between the two half-moulds to obtain a monolithic article, characterised by the fact that it includes also an expansible frame (28) adapted to be placed between the peripheral region of the stack of sheets (26) and one of the half-moulds, and means (36) for inflating this expansible frame (30).

7. Apparatus according to Claim 6, characterised by the fact that the expansible frame (28) is formed of two superposed sheets (30) bonded together along internal and external peripheral bonding lines (32, 34), the apparatus also including a bonding barrier (38) adapted to be interposed between the expansible frame (28) and the stack of sheets (26).

8. Apparatus according to Claim 7, characterised by the fact that the expansible frame (28) is a throw-away tool of which the superposed sheets (30) are bonded to the sheets (26) of the stack along the external peripheral bonding line (34).

9. Apparatus according to Claim 8, characterised by the fact that the two half-moulds (12, 14) have respectively the shape of a punch and the shape of a matrix or die.
